# FASCICULE DE BREVET EUROPEEN

(11) **EP 3 774 429 B1**
(45) Date de publication et mention de la délivrance du brevet: **10.01.2024**
(21) Numéro de dépôt: 19719546.4
(22) Date de dépôt: 26.03.2019
(51) Int. Cl.: B60K 11/08, B60K 11/04

(54) **DISPOSITIF DE REGULATION D'UN FLUX D'AIR POUR UNE ENTREE D'AIR D'UN VEHICULE AUTOMOBILE**
LUFTSTRÖMUNGSREGELUNGSVORRICHTUNG FÜR EINEN LUFTEINLASS EINES KRAFTFAHRZEUGS
AIR FLOW REGULATING DEVICE FOR AN AIR INLET OF A MOTOR VEHICLE

(30) Priorité: 30.03.2018 FR 1852846
(43) Date de publication de la demande: 17.02.2021
(73) Titulaire: Valeo Systemes Thermiques-THS, 78322 Le Mesnil Saint Denis Cedex (FR)
(72) Inventeur: HENON, Emmanuel, 78322 Le Mesnil Saint Denis Cedex (FR); FERLAY, Benjamin, 85774 Unterfoehring (DE); GENGER, Michael, 96476 Bad Rodach (DE)
(74) Mandataire: Valeo Systèmes Thermiques
(86) Numéro de dépôt international: PCT/FR2019/050675
(87) Numéro de publication internationale: WO 2019/186044

(56) Documents cités:
- EP-A1- 0 982 168
- EP-A1- 1 635 049
- EP-A1- 2 365 139
- EP-A1- 2 402 574
- EP-A2- 1 947 250
- DE-A1- 2 554 752
- FR-A1- 2 613 771
- US-A- 3 857 453
- US-A- 5 778 081
- US-A1- 2012 048 631
- US-A1- 2016 096 424

## Description

L'invention a pour objet un dispositif de régulation d'un flux d'air pour une entrée d'air d'un véhicule automobile et plus précisément ainsi qu'un véhicule automobile, et notamment un véhicule automobile électrique comprenant un tel dispositif de régulation d'entrée d'air.

De manière générale, un véhicule automobile comprend une entrée d'air se présentant sous la forme d'une ouverture située sur la face avant dudit véhicule automobile. L'air entrant est utilisé pour permettre un échange de chaleur entre celui-ci et le système de refroidissement du véhicule automobile, ledit système de refroidissement étant situé à proximité de la face avant dudit véhicule. Plus précisément, l'air qui pénètre dans le compartiment moteur du véhicule automobile est guidé vers le système de refroidissement dudit véhicule automobile pour permettre un échange thermique entre l'air entrant et l'échangeur de chaleur du système de refroidissement. Il est important de minimiser les déperditions du flux d'air entre l'entrée d'air et l'échangeur de chaleur. En effet, tout flux d'air pénétrant à l'intérieur du véhicule, et s'échappant vers le compartiment moteur avant d'avoir contribué à l'échange de chaleur à l'intérieur du véhicule automobile, influence de manière négative le coefficient de résistance à l'air dudit véhicule automobile.

Il est connu d'utiliser des guides d'air se présentant sous la forme d'un conduit généralement en plastique ou autre matériau flexible reliant l'entrée d'air au système de refroidissement.

Dans le cadre d'un véhicule électrique, le dispositif de régulation d'entrée d'air peut comprendre un conduit d'air agencé en aval du système de refroidissement et conçu pour guider le flux d'air vers l'extérieur du véhicule. Un tel conduit peut s'avérer avantageux pour générer un effet venturi en aval de l'unité de refroidissement de sorte qu'un plus grand débit d'air puisse passer au travers du système de refroidissement améliorant ainsi le rendement thermique.

Un tel conduit présente cependant certains inconvénients. En effet, lors qu'un véhicule électrique est à l'arrêt et branché à une station, ou borne électrique, afin de recharger la batterie, le groupe moto ventilateur du système de refroidissement est activé afin d'assurer un refroidissement de la batterie et éviter que celle-ci ne surchauffe. Toutefois un tel fonctionnement génère des nuisances sonores pour l'utilisateur.

La présente invention cherche à surmonter cet inconvénient et propose un dispositif de régulation d'un flux d'air pour une entrée d'air d'un véhicule automobile, comme défini dans la revendication 1, comprenant un conduit définissant un canal d'écoulement où s'écoule un flux d'air, dans lequel est agencé une unité de refroidissement comprenant au moins un échangeur de chaleur et un groupe moto-ventilateur, le conduit comprenant au moins un moyen d'absorption acoustique agencé de manière à limiter au moins partiellement la propagation des nuisances sonores vers l'extérieur du conduit, dans lequel le conduit comprend une ou plusieurs cavités fonctionnant comme résonateur d'Helmholtz.

Un volet permet d'obturer le canal d'écoulement et notamment le conduit menant le flux d'air vers l'extérieur du véhicule. Les nuisances sonores ainsi générées lors du rechargement de la batterie sont contenues à l'intérieur du véhicule et ne peuvent plus être perçues à l'extérieur du véhicule.

D'autres modes de réalisation du dispositif de régulation d'entrée d'air pris isolément ou en combinaison proposent que :
- le dispositif de régulation comprend un volet agencé au sein du canal d'écoulement en aval de l'unité de refroidissement par rapport à l'écoulement du flux d'air ;
- le volet est de type tambour ou coulissant ;
- le canal d'écoulement comprend une entrée et une sortie, la dite sortie étant composée d'au moins deux conduits distincts, le volet étant apte à obturer chacun desdits conduits ;
- un dispositif d'obturation comprenant un ensemble de volets d'obturation aptes à pivoter en rotation de manière à faire varier le débit de flux d'air, est agencé dans le canal d'écoulement en amont de l'unité de refroidissement par rapport à l'écoulement du flux d'air ;
- l'unité de refroidissement est inclinée par rapport au dispositif d'obturation ;
- des aubes sont agencées en amont et/ou en aval de l'unité de refroidissement par rapport à l'écoulement du flux d'air ;
- les aubes s'étendent du dispositif d'obturation jusqu'à l'unité de refroidissement ;
- la section de passage du canal d'écoulement s'agrandit depuis l'entrée jusqu'à l'unité de refroidissement et rétrécit depuis l'unité de refroidissement jusqu'à la sortie ;
- le moyen d'absorption acoustique est agencé en aval de l'unité de refroidissement par rapport à l'écoulement du flux d'air,
- le moyen d'absorption acoustique est agencé en amont de l'unité de refroidissement par rapport à l'écoulement du flux d'air,
- le moyen d'absorption acoustique est agencé en amont et en aval de l'unité de refroidissement par rapport à l'écoulement du flux d'air,
- le moyen d'absorption acoustique comprend un revêtement fait d'un matériau tissé ou non-tissé constitué de différentes fibres ou d'une mousse,
- des obstacles à l'écoulement du flux d'air sont agencés au sein du conduit,
- les obstacles comprennent des parois avec des micro-perforations et/ou des parois faites d'un matériau insonorisant tel que du polyester et/ou à des poutres s'étendant sur la largueur du conduit,
- le conduit est fait d'un matériau d'absorption acoustique tel que du polyester, de la laine de roche ou encore tout autre polymère ayant des fibres de verre ou des fibres de chanvre,
- un labyrinthe phonique est agencé au sein du conduit,
- le moyen d'absorption acoustique est un système de contrôle actif du bruit.

L'invention concerne également un véhicule comprenant un tel dispositif de régulation d'un flux d'air pour une entrée d'air selon l'invention.

D'autres modes de réalisation du véhicule pris isolément ou en combinaison proposent que :
- le véhicule comprend une entrée d'air, éventuellement dotée d'une calandre, la sortie du canal d'écoulement comprend un conduit de débourrage agencé pour mener le flux d'air vers l'extérieur du véhicule et un conduit de refroidissement agencé pour mener le flux d'air vers le compartiment moteur du véhicule ;
- le véhicule comprend en outre une entrée d'air additionnelle et un conduit additionnel reliant ladite entrée additionnelle au conduit de débourrage.

D'autres caractéristiques et avantages de l'invention apparaîtront à la lecture de la description qui va suivre. Celle-ci est purement illustrative et doit être lue en regard des dessins annexés sur lesquels :
- la figure 1 illustre un dispositif de régulation d'un flux d'air selon l'invention selon une vue de profil,
- la figure 2 illustre une coupe du dispositif de régulation d'un flux d'air de la figure 1 selon une vue de profil,
- la figure 3 illustre une partie du dispositif de régulation d'un flux d'air selon une vue en perspective,
- la figure 4 illustre de manière schématique un véhicule selon l'invention selon une vue de profil,
- les figures 5a à 5d illustrent de manière schématique une partie du dispositif de régulation d'un flux selon divers modes de réalisation,
- la figure 6 illustre un dispositif de régulation d'un flux d'air selon l'invention selon une vue de profil.

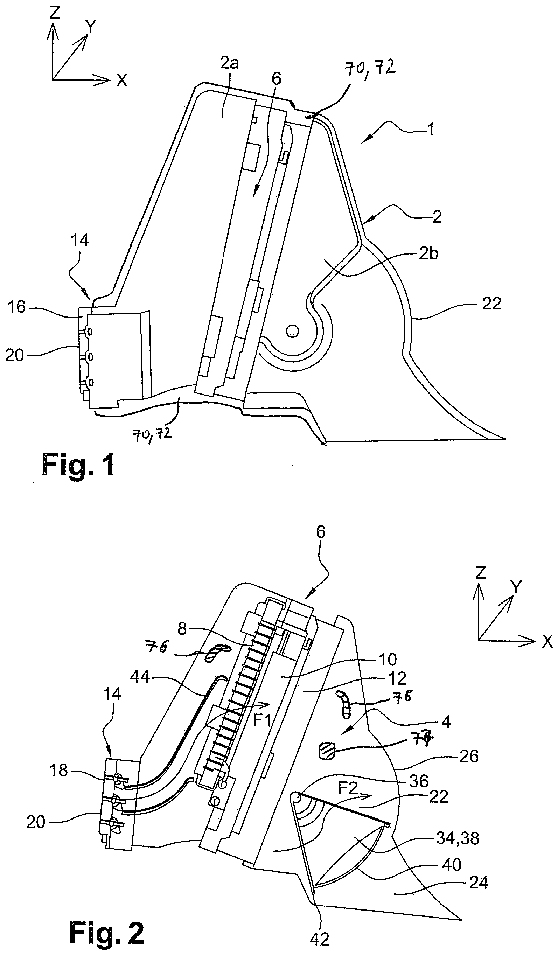

La figure 1 illustre le dispositif de régulation 1 d'un flux d'air pour une entrée d'air d'un véhicule automobile selon l'invention. Le dispositif de régulation 1 s'étend selon une direction longitudinale (X), transversale (Y) et verticale (Z), par exemple par rapport aux axes du véhicule, comme représenté par les axes sur les figures 1, 2 et 4.

Le dispositif de régulation 1 d'un flux d'air selon l'invention comprend un conduit 2 correspondant à une enveloppe, un guide d'air, ou encore un boîtier, définissant ainsi un canal d'écoulement 4 avec une entrée 20 et une sortie 22 dans lequel s'écoule un flux d'air. Le conduit 2 est réalisé en matériau flexible afin d'absorber les vibrations du véhicule lorsque celui-ci roule, et en matériau suffisamment résistant afin de porter des éléments tels que des échangeurs de chaleur, certains plastiques par exemple en polypropylène ou en polyamide-6 se prêtent à une telle utilisation.

Selon l'invention, un ou des moyens d'absorption acoustique 70, autrement dit des moyens d'insonorisation ou encore des isolants acoustiques, peuvent être agencés au sein du conduit 2 assurant ainsi la suppression ou au moins la limitation de la propagation de bruit vers l'extérieur du conduit 2, et du véhicule, lorsque le dispositif de régulation 1 est monté dans le véhicule.

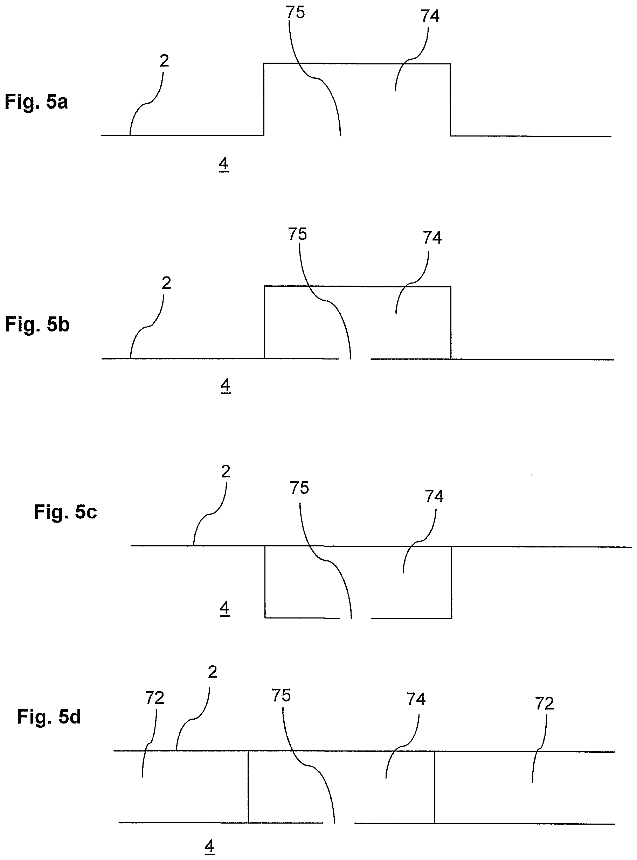

Un premier moyen d'absorption acoustique 70 correspond à un revêtement 72 absorbant les sons agencé sur les parois du conduit 2 comme illustré en figure 5. Le revêtement 72 peut correspondre à une couche de mousse en polyuréthanne qui possède des pores ouverts et/ou fermés et préférentiellement imprégnée d'un copolymère de vinylidène ou à une couche d'un matériau tissé ou non-tissé tel un feutre, une laine synthétique ou naturelle constituée de différentes fibres ou encore un textile synthétique isolant constitué de polytéréphtalate d'éthylène (PET) et/ou d'autres fibres synthétiques. La laine synthétique peut par exemple correspondre à de la laine de verre ou de la laine de roche. Le revêtement 72 peut être rapporté sur le conduit 2 soit par thermoformage, soit au moyen d'un couvercle ou capot dans lequel le revêtement 72 est agencé entre le conduit 2 et le couvercle.

Un deuxième moyen d'absorption acoustique 70 correspond à une ou plusieurs cavités 74 fonctionnant comme résonateur d'Helmholtz. Autrement dit le conduit 2 comprend des cavités 74 au sein de ses parois de manière à former des chambres dans lesquelles les nuisances sonores vont être emprisonnées et être atténuées en rebondissant sur les différentes parois de la chambre. Les résonateurs d'Helmholtz 74, autrement dit les chambres, peuvent être agencés à l'intérieur du conduit 2 (figure 5c) ou sur la paroi externe du conduit 2 (figure 5a,5b), l'intérieur de la chambre étant relié au conduit 2 par une ouverture ou un col d'étranglement 75. La figure 5d illustre un mode de réalisation où un revêtement 72 est agencé sur la paroi du conduit 2 qui comprend en outre une cavité 74.

Un troisième moyen d'absorption acoustique 70 est d'agencer des obstacles 76 au sein du conduit 2 afin de briser l'écoulement laminaire du flux d'air et d'éviter les phénomènes de sifflements. Ces obstacles correspondent par exemple à des parois avec des micro-perforations, ou à des parois faites d'un matériau absorbant acoustique tel que du polyester ou encore un matériau à base de chanvre. Les obstacles 76 peuvent aussi correspondre à des poutres 77 s'étendant sur la largueur du conduit 2. Les obstacles 76 peuvent être aussi faits d'un matériau insonorisant tel qu'une mousse en polyuréthanne possédant des pores ouverts et/ou fermés et préférentiellement imprégnée d'un copolymère de vinylidène. Les obstacles 76 peuvent sinon être fait d'un matériau tissé ou non-tissé tel du feutre, de la laine synthétique ou naturelle constituée de différentes fibres ou encore un textile synthétique isolant constitué de polytéréphtalate d'éthylène (PET) et/ou d'autres fibres synthétiques, la laine synthétique pouvant par exemple correspondre à de la laine de verre ou de la laine de roche.

Un quatrième moyen d'absorption acoustique 70 est que le conduit 2 soit fait d'un matériau d'absorption acoustique, ou d'un matériau ayant des micro-perforations, tel que du polyester, de la laine par exemple de roche ou de verre, ou encore tout autre polymère ayant des fibres de verre ou des fibres de chanvre, le conduit 2 étant réalisé de ces matériaux par thermoformage.

Un cinquième moyen d'absorption acoustique 70 est d'agencer un labyrinthe phonique 78 au sein du conduit 2. Le labyrinthe phonique 78 comprend une entrée 79 et une sortie 80 et peut par exemple comprendre un volet 86 agencé à l'entrée 79 du labyrinthe phonique 78 permettant ainsi d'orienter le flux d'air vers le labyrinthe phonique 78. Le volet 86 permet ou non le passage du flux d'air à travers le labyrinthe phonique 78. Le flux d'air en rebondissant sur les parois est dévié dans sa trajectoire ce qui casse ainsi l'écoulement laminaire du flux d'air et réduisant les nuisances sonores. Des obstacles 81 à l'écoulement du flux d'air peuvent aussi être agencés au sein du labyrinthe phonique 78. Le labyrinthe phonique 78 peut être agencé au sein du conduit 2.

Un sixième moyen d'absorption acoustique 70 est d'agencer un système de contrôle actif du bruit avec par exemple un filtrage adaptif pour annuler le bruit comme par exemple avec un haut-parleur ou une enceinte vibrante. Il est par exemple possible d'agencer au niveau de l'entrée du conduit 2 un détecteur phonique 82 détectant les ondes sonores. Ce détecteur est couplé à une enceinte apte à émettre une onde en antiphase des ondes sonores en entrée du conduit de manière à créer une interférence et de réduire ainsi activement les nuisances sonores. Il est aussi possible de coupler le détecteur phonique avec un élément piézo-électrique 84 utilisant le conduit 2 comme enceinte vibrante émettant l'onde en antiphase des ondes sonores en entrée du conduit 2. Le détecteur phonique 81 étant connecté à l'élément piézo-électrique 84 ou à l'enceinte directement ou via l'unité de commande électronique du véhicule (ECU).

Bien évidemment l'invention ne se limite pas à un mode de réalisation et il est possible selon l'invention de combiner différents moyens d'absorption acoustique 70 dans un dispositif de régulation 1, par exemple comme illustré en figure 5d. Bien évidemment il est possible de combiner plusieurs moyens d'absorption acoustique 70.

Le dispositif de régulation 1 d'un flux d'air selon l'invention comprend en outre une unité de refroidissement 6. L'unité de refroidissement 6 comprend au moins un échangeur de chaleur destiné à permettre un échange thermique entre le flux d'air et le fluide circulant au sein de l'échangeur de chaleur. Telle qu'illustrée en figure 2, l'unité de refroidissement 6 comprend ici un premier et un second échangeur de chaleur 8, 10. Le premier échangeur de chaleur 8 correspond par exemple à un condenseur tandis que le second échangeur de chaleur 10 correspond par exemple à un radiateur. L'unité de refroidissement 6 comprend en outre un groupe moto-ventilateur 12 correspondant à un ventilateur avec des pâles et un moteur associé de manière à pouvoir aspirer et relâcher un flux d'air à travers le dispositif de régulation 1, et ce même lorsque le véhicule est à l'arrêt.

Le dispositif de régulation 1 d'un flux d'air peut comprendre en outre un dispositif d'obturation 14 comprenant un ensemble de volets d'obturation 18 aptes à pivoter en rotation de manière à faire varier le débit du flux d'air, ledit dispositif d'obturation 14 est agencé dans le canal d'écoulement 4 en amont de l'unité de refroidissement 6 par rapport à l'écoulement du flux d'air. Le dispositif d'obturation 14 comprend en outre un cadre support 16 présentant des paliers de manière à porter les volets d'obturation 18.

Chaque volet d'obturation 18 comprend un axe de rotation se matérialisant par un tourillon qui est inséré dans les paliers du cadre support 16. Les axes de rotation permettent aux volets d'obturation 18 de passer d'une configuration d'ouverture à une configuration de fermeture. La configuration d'ouverture, ou autrement dit ouvrir un volet d'obturation 18, revient à placer (par rotation) les volets d'obturation 18 de manière à ce qu'ils s'opposent le moins possible au passage du flux d'air tout en l'orientant de manière appropriée. Comme illustré sur la figure 2, dans la configuration d'ouverture, les volets d'obturation 18 sont agencés dans une position horizontale, en d'autres termes ils s'étendent selon une direction longitudinale (X) et transversale (Y), et assurent ainsi que le débit pour le flux d'air soit maximal, l'entrée 20 d'air étant dégagée. La configuration de fermeture, ou autrement dit fermer un volet d'obturation 18, revient à placer les volets d'obturation 18 de manière à ce qu'ils s'opposent par leur surface frontale au maximum à l'écoulement du flux d'air F, en coopération avec les autres volets d'obturation 18. Dans cette configuration, les volets d'obturation 18 sont agencés dans une position verticale, autrement dit ils s'étendent selon une direction transversale (Y) et verticale (Z), et assurent ainsi que le débit pour le flux d'air soit minimal voire nul, l'entrée 20 d'air étant obturée. Bien évidement, les volets d'obturation 18 sont aptes à adopter toute position intermédiaire entre ces deux configurations.

Le conduit 2 telle qu'illustrée en figure 1, est réalisée en deux parties, une première partie 2a reliant l'entrée du conduit 2, et donc l'entrée 20 du canal découlement 4, où est agencée le dispositif d'obturation 14, à l'unité de refroidissement 6 et une deuxième partie 2b reliant l'unité de refroidissement 6 à la sortie du conduit 2 et donc à la sortie 22 du canal d'écoulement 4. Les parties 2a, 2b du conduit comprennent des moyens de fixation tels que des clips, vis, trous taraudés, etc. de formes complémentaires aux moyens de fixation agencés sur l'unité de refroidissement 6. Les parties 2a,2b peuvent aussi comprendre des moyens de fixation de formes complémentaires de manière à ce que chaque partie 2a,2b puisse se fixer l'une à l'autre. Il est également envisageable d'avoir un conduit 2 en une seule pièce monobloc formant continuité de matière entre l'entrée 20 et la sortie 22 du canal d'écoulement 4.

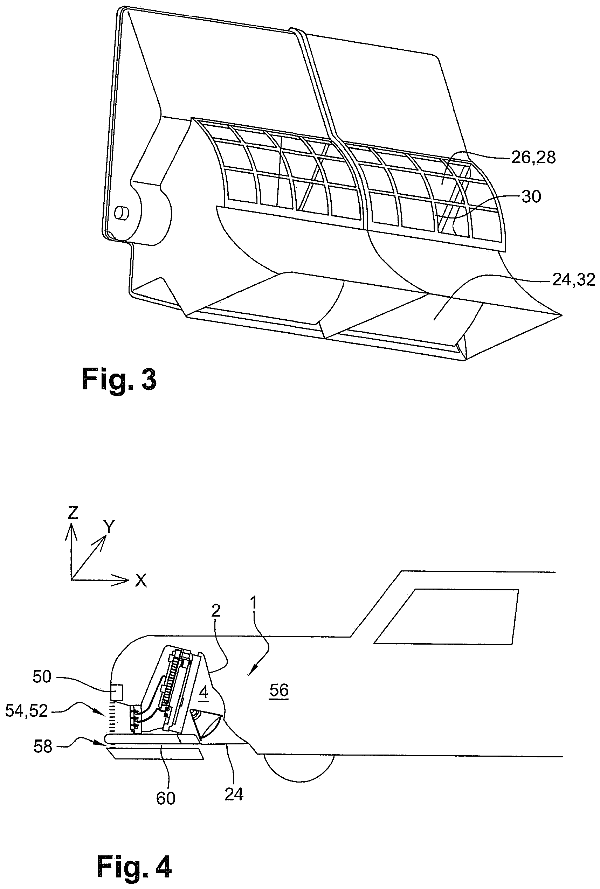

Le ou les moyens d'absorption acoustique 70 sont préférentiellement agencés au sein du conduit 2 dans la partie 2b autrement dit en aval de l'unité de refroidissement 6 par rapport à l'écoulement du flux d'air. Bien évidemment, il est possible d'agencer le ou les moyens d'absorption acoustique 70 en amont de l'unité de refroidissement 6. Il est aussi possible d'agencer le ou les moyens d'absorption acoustique 70 en amont et en aval de l'unité de refroidissement 6
Le canal d'écoulement 4 comprend une entrée 20 et une sortie 22 cette dernière est composée d'au moins deux conduits distincts, le volet qui sera décrit ultérieurement étant apte à obturer chacun desdits conduits. La sortie 22 du canal d'écoulement 4 comprend un conduit de débourrage 24 agencé pour guider le flux d'air vers l'extérieur du véhicule et un conduit de refroidissement 26 agencé pour guider le flux d'air vers le compartiment moteur du véhicule. Comme illustré sur la figure 3, le conduit de refroidissement 26 correspond ici un canal où une ouverture 28 dotée d'une grille 30 est réalisée au sein d'une paroi du conduit 2 permettant ainsi au flux d'air de s'écouler du canal d'écoulement 4 vers le compartiment moteur. Le conduit de débourrage 24 correspond ici à un canal où une ouverture 32 est réalisée au sein d'une paroi du conduit 2 permettant ainsi au flux d'air de s'écouler du canal d'écoulement 4 vers l'extérieur du véhicule.

Le dispositif de régulation 1 d'un flux d'air peut comprendre en outre un volet 34 agencé au sein du canal d'écoulement 4 en aval de l'unité de refroidissement 6 par rapport à l'écoulement du flux d'air. Le volet 34 est de type tambour comme illustré sur la figure 2 car, étant donné qu'un tel dispositif de régulation s'étend sur une grande partie de la largeur du véhicule (Axe Y) pendant ainsi atteindre plus d'un mètre, le volet tambour, de par sa structure qui présente une meilleure résistance mécanique, est mieux adapté pour un tel usage. D'autres volets peuvent être envisageables tels qu'un volet coulissant (également connu sous l'appellation anglaise sliding door) comprenant une porte coulissante sur laquelle est agencée au moins une crémaillère et un engrenage complémentaire à la crémaillère mis en rotation autour d'un axe par un actionneur afin de mettre ce volet en mouvement, notamment selon un mouvement de translation, selon un mode de réalisation non illustré.

Le volet 34 tambour comprend un axe de rotation 36 sous la forme d'un arbre permettant le pivotement du volet 34. Le volet 34 tambour comprend en outre trois parois pleines. Deux parois latérales 38 agencées aux deux extrémités opposées de l'axe de rotation 36, ces deux parois latérales 38 sont parallèles et s'inscrivent dans un plan défini par les axes XZ perpendiculaire à l'axe de rotation 36, et une paroi transversale 40 reliant les parois latérales l'unes à l'autre. La paroi transversale 40 s'inscrit dans un plan défini par les axes XZ de forme galbée permet l'écoulement ou le tarissement du flux d'air dans un conduit 24,26 de sortie 22 du canal d'écoulement 4 selon son positionnement. Le volume entre les parois latérales 38, la paroi transversale 40 et l'axe de rotation 36 est inoccupé si bien que le flux d'air est apte à passer entre ces éléments comme illustré par la flèche F2 sur la figure 2.

La paroi transversale 40 du volet 34 tambour est apte à obturer le conduit de débourrage 24 comme illustré sur la figure 2. La paroi transversale 40 du volet 34 tambour est également apte à obturer le conduit de refroidissement 26 selon un mode de réalisation non illustré.

Les différentes parois du volet 34 épousent la forme des parois du conduit 2 de manière à assurer une bonne étanchéité, le volet 34 peut également comprendre en outre des lèvres 42 en élastomère surmoulées aux extrémités des parois. Ainsi la paroi du conduit 2 où est agencé le canal de refroidissement 26 est de forme sensiblement arrondie, de manière à ce que la paroi transversale 40 de forme galbée du volet 34 puisse obturer intégralement ce conduit de sortie.

Lorsque le véhicule est en train de rouler, le volet 34 est agencé de manière à obturer le conduit de refroidissement 26, le flux d'air passant donc par le conduit de débourrage 24. Lorsque le véhicule est en stationnement à une borne (la batterie étant en train d'être rechargée), le volet 34 est agencé de manière à obturer le conduit de débourrage 24 conduit de refroidissement 26, le flux d'air passant donc par le conduit de refroidissement 26 comme illustré sur la figure 2. Le volet 34 est apte à adopter toute position intermédiaire.

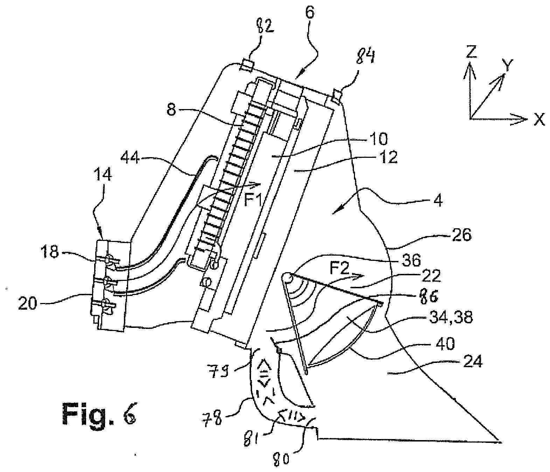

L'entrée 79 du labyrinthe phonique 78 peut par exemple être agencée en aval de l'unité de refroidissement 6 et en amont de la sortie 22 du canal d'écoulement 4 et la sortie 80 du labyrinthe phonique 78 au niveau du conduit de débourrage 24 comme illustré en figure 6. Bien évidement, il est aussi possible d'agencer la sortie 80 du labyrinthe phonique 78 au niveau du conduit de refroidissement 26. Il est également possible d'agencer deux labyrinthes phoniques 78 chacun ayant une entrée 79 agencée en aval de l'unité de refroidissement 6 et en amont de la sortie 22 du canal d'écoulement 4 et une sortie 80 au niveau du conduit de débourrage 24 et/ou au niveau du conduit de refroidissement 26. Il est aussi possible d'agencer l'entrée 79 du labyrinthe phonique 78 en amont de l'unité de refroidissement 6.

L'unité de refroidissement 6 peut être inclinée par rapport au dispositif d'obturation 14. En d'autres termes, les plans médians de l'unité de refroidissement 6 et du dispositif d'obturation 14 forment un angle différent de 0° (non nul), en particulier un angle compris dans un écart entre 10 et 80°, plus précisément dans un écart entre 30° et 60°. Un tel agencement permet de diminuer l'encombrement stérique du dispositif de régulation 1.

Il peut s'avérer avantageux que des aubes 44 soient agencées en amont et/ou en aval de l'unité de refroidissement 6 par rapport à l'écoulement du flux d'air. Les aubes 44 correspondent à des guides d'air sous forme de parois aux formes arrondies définissant des couloirs pour le flux d'air afin de répartir le flux d'air F1 (figure 2) sur l'intégralité de la surface des échangeurs de chaleur 8, 10 de l'unité de refroidissement 6, il en résulte un meilleur rendement thermique.

Afin d'améliorer ce rendement thermique, il s'avère bénéfique que les aubes 44 s'étendent du dispositif d'obturation 14 jusqu'à l'unité de refroidissement 6. Les aubes 44 peuvent par exemple prolonger la continuité des volets d'obturation 18 du dispositif d'obturation 14 lorsqu'ils sont en configuration d'ouverture. Les aubes 44 peuvent également avoir une forme générale en S avec un bord d'attaque correspondant à une extrémité de l'aube s'étendant dans un plan horizontal définit par les axes X et Y, un bord de fuite sensiblement parallèle au bord d'attaque toutefois à une hauteur (Z) différente et un tronçon incliné ou rampe reliant le bord d'attaque et le bord de fuite qui s'étend principalement selon un axe vertical (Z). L'invention ne se limite pas à la forme des aubes 44 tant qu'elles servent de guide pour le flux d'air, les aubes 44 peuvent par exemple être en forme de quart de cercle.

La première partie plane extrémale de l'aube 44 destinée à être traversée par le flux d'air F1 correspond au bord d'attaque et est plane. La seconde et dernière partie plane extrémale destinée à être traversée par le flux d'air F1 correspond au bord de fuite est également plane. Le tronçon incliné ne fait pas partie des bords d'attaque et de fuite.

Les aubes 44 s'étendent entre le dispositif d'obturation 14 jusqu'à l'unité de refroidissement 6 sans pour autant être en contact avec ces éléments. Afin de mieux guider l'air, les bords d'attaque et de fuite des aubes 44 sont agencés à proximité respective du dispositif d'obturation 14 et de l'unité de refroidissement 6, sans pour autant être en butée contre ces éléments.

La section de passage du canal d'écoulement 4 peut s'agrandir depuis l'entrée 20 du canal d'écoulement 4 jusqu'à l'unité de refroidissement 6 et rétrécir depuis l'unité de refroidissement 6 jusqu'à la sortie 22 du canal d'écoulement 4 selon le sens d'écoulement du flux d'air. Autrement dit, la section de passage du canal d'écoulement 4 a au moins une dimension (largeur et/ou hauteur) qui augmente au fur et à mesure de la longueur, ou au fur et à mesure que l'on se rapproche de l'unité de refroidissement 6 en partant de l'entrée 20, selon le sens d'écoulement du flux d'air. De manière analogue, la section de passage du canal d'écoulement 4 a au moins une dimension (largeur et/ou hauteur) qui diminue au fur et à mesure de la longueur, ou au fur et à mesure que l'on s'éloigne de l'unité de refroidissement 6 en se rapprochant de la sortie 22, selon le sens d'écoulement du flux d'air.

La figure 4 illustre une coupe verticale d'un véhicule automobile selon une direction longitudinale du véhicule. Le véhicule comprend une poutre de pare-chocs 50 en dessous de laquelle est placée une calandre 52 ou grille. Cette calandre 52 est fixe et reste en position ouverte pour laisser passer un flux d'air entrant. Le véhicule selon l'invention comprend un dispositif 1 de régulation d'entrée d'air tel que décrit ci-dessus.

Le véhicule automobile selon l'invention comprend une entrée d'air 54 dotée d'une calandre 52 et un dispositif de régulation 1 de cette entrée d'air. La sortie 22 du canal d'écoulement 4 comprend un conduit de débourrage 24 agencé pour mener le flux d'air vers l'extérieur du véhicule et un conduit de refroidissement 26 agencé pour mener le flux d'air vers le compartiment moteur 56 du véhicule.

Le véhicule selon l'invention comprend en outre une entrée additionnelle 58 ainsi qu'un conduit additionnel 60 reliant ladite entrée additionnelle 58 avec le conduit de débourrage 24 menant le flux d'air vers l'extérieur du véhicule. Ceci permet d'accentuer l'effet venturi du conduit de débourrage 24 augmentant ainsi le débit d'air circulant améliorant ainsi le rendement thermique. L'entrée additionnelle 58 peut également être dotée d'une grille afin d'éviter tout corps étranger (branches, feuilles,...) de pénétrer au sein du conduit additionnel 60.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention comme définie dans les revendications.

## Revendications

1. Dispositif de régulation (1) d'un flux d'air pour une entrée d'air d'un véhicule automobile, comprenant un conduit (2) définissant un canal d'écoulement (4) où s'écoule un flux d'air, dans lequel est agencé une unité de refroidissement (6) comprenant au moins un échangeur de chaleur (8,10) et un groupe moto-ventilateur (12), le conduit (2) comprenant au moins un moyen d'absorption acoustique (70) agencé de manière à limiter au moins partiellement la propagation des nuisances sonores vers l'extérieur du conduit (2), dans lequel le conduit (2) comprend une ou plusieurs cavités (74) fonctionnant comme résonateur d'Helmholtz.

2. Dispositif de régulation (1) selon la revendication 1, dans lequel le moyen d'absorption acoustique (70) est agencé en aval de l'unité de refroidissement (6) par rapport à l'écoulement du flux d'air.

3. Dispositif de régulation (1) selon l'une des revendication 1 ou 2, dans lequel le moyen d'absorption acoustique (70) comprend un revêtement (72) fait d'un matériau tissé ou non-tissé constitué de différentes fibres ou d'une mousse.

4. Dispositif de régulation (1) selon l'une des revendications précédentes, dans lequel des obstacles (76) à l'écoulement du flux d'air sont agencés au sein du conduit (2).

5. Dispositif de régulation (1) selon la revendication 4, dans lequel les obstacles (76) comprennent des parois avec des micro-perforations et/ou des parois faites d'un matériau insonorisant tel que du polyester et/ou à des poutres (77) s'étendant sur la largueur du conduit (2).

6. Dispositif de régulation (1) selon l'une des revendications précédentes, dans lequel le conduit (2) est fait d'un matériau d'absorption acoustique tel que du polyester, de la laine de roche ou encore tout autre polymère ayant des fibres de verre ou des fibres de chanvre.

7. Dispositif de régulation (1) selon l'une des revendications précédentes, dans lequel un labyrinthe phonique (78) est agencé au sein du conduit (2).

8. Dispositif de régulation (1) selon l'une des revendications précédentes, dans lequel le moyen d'absorption acoustique (70) est un système de contrôle actif du bruit (82,84).

9. Véhicule automobile comprenant une entrée d'air (54) et un dispositif de régulation (1) pour ladite entrée d'air (54) selon l'une des revendications 1 à 8.

## Patentansprüche

1. Regelungsvorrichtung (1) zur Regelung eines Luftstroms für einen Lufteinlass eines Kraftfahrzeug, umfassend einen Kanal (2), der einen Strömungsweg (4) definiert, in dem ein Luftstrom strömt, in der eine Kühleinheit (6) angeordnet ist, die mindestens einen Wärmetauscher (8, 10) und eine Motorgebläseeinheit (12) umfasst, wobei der Kanal (2) mindestens ein Schallabsorptionsmittel (70) umfasst, das so angeordnet ist, dass die Ausbreitung der Lärmbelästigungen nach außerhalb des Kanals (2) mindestens teilweise begrenzt werden, wobei der Kanal (2) einen oder mehrere Hohlräume (74) umfasst, die wie ein Helmholtz-Resonator arbeiten.

2. Regelungsvorrichtung (1) nach Anspruch 1, in der das Schallabsorptionsmittel (70) stromab der Kühleinheit (6) in Bezug auf die Strömung des Luftstroms angeordnet ist.

3. Regelungsvorrichtung (1) nach einem der Ansprüche 1 oder 2, in der das Schallabsorptionsmittel (70) einen Überzug (72) umfasst, der aus einem gewebten oder Vliesmaterial, das aus verschiedenen Fasern besteht, oder aus einem Schaumstoff hergestellt ist.

4. Regelungsvorrichtung (1) nach einem der vorhergehenden Ansprüche, in der Hindernisse (76) für die Strömung des Luftstroms innerhalb des Kanals (2) angeordnet sind.

5. Regelungsvorrichtung (1) nach Anspruch 4, in der die Hindernisse (76) Wände mit Mikroperforationen und/oder Wände, die aus einem schalldämmenden Material wie Polyester hergestellt sind, und/oder mit Balken (77), die sich über die Breite des Kanals (2) erstrecken, umfassen.

6. Regelungsvorrichtung (1) nach einem der vorhergehenden Ansprüche, in welcher der Kanal (2) aus einem Schallabsorptionsmaterial wie Polyester, Steinwolle oder aber jedem anderen Polymer mit Glasfasern oder Hanffasern hergestellt ist.

7. Regelungsvorrichtung (1) nach einem der vorhergehenden Ansprüche, in der ein Schalllabyrinth (78) innerhalb des Kanals (2) angeordnet ist.

8. Regelungsvorrichtung (1) nach einem der vorhergehenden Ansprüche, in der das Schallabsorptionsmittel (70) ein System zur aktiven Kontrolle des Lärms (82, 84) ist.

9. Kraftfahrzeug, das einen Lufteinlass (54) und eine Regelungsvorrichtung (1) für den Lufteinlass (54) nach einem der Ansprüche 1 bis 8 umfasst.

## Claims

1. Regulating device (1) for regulating an air stream for an air inlet of a motor vehicle, comprising a duct (2) defining a flow channel (4) where an air stream flows, in which is arranged a cooling unit (6) comprising at least one heat exchanger (8, 10) and engine fans (12), the duct (2) comprising at least one acoustic absorption means (70) arranged so as to at least partially limit the propagation of noise pollution towards the outside of the duct (2), wherein the duct (2) comprises one or more cavities (74) acting as Helmholtz resonator.

2. Regulating device (1) according to Claim 1, wherein the acoustic absorption means (70) is arranged downstream of the cooling unit (6) in relation to the flow of the air stream.

3. Regulating device (1) according to either of Claims 1 and 2, wherein the acoustic absorption means (70) comprises a coating (72) made of a woven or nonwoven material constituted of various fibres or a foam.

4. Regulating device (1) according to one of the preceding claims, wherein obstacles (76) to the flow of the air stream are arranged within the duct (2).

5. Regulating device (1) according to Claim 4, wherein the obstacles (76) comprise walls with micro-perforations and/or walls made of a sound insulating material such as polyester and/or beams (77) extending over the width of the duct (2).

6. Regulating device (1) according to one of the preceding claims, wherein the duct (2) is made of an acoustic absorption material such as polyester, rock wool or any other polymer having glass fibres or hemp fibres.

7. Regulating device (1) according to one of the preceding claims, wherein a sound labyrinth (78) is arranged within the duct (2).

8. Regulating device (1) according to one of the preceding claims, wherein the acoustic absorption means (70) is an active noise control system (82, 84).

9. Motor vehicle comprising an air inlet (54) and a regulating device (1) for the said air inlet (54) according to one of Claims 1 to 8.
